# EUROPEAN PATENT APPLICATION

(11) **EP 3 806 011 A1**
(43) Date of publication of application: **14.04.2021**
(21) Application number: 19201868.7
(22) Date of filing: 08.10.2019
(51) Int. Cl.: G06Q 10/06, G06Q 10/10

(54) **METHOD AND SYSTEM FOR EFFICIENT ALLOCATION OF HUMAN RESOURCES**

(71) Applicant: Hexagon Technology Center GmbH, 9435 Heerbrugg (CH)
(72) Inventor: PETTERSSON, Bo, L-1225 Luxembourg (LU)
(74) Representative: Kaminski Harmann

(57) **Abstract**

The invention pertains to a computer-implemented method for automated and optimized allocation of persons (21-26) to a plurality of projects (41-43), each project comprising one or more tasks to be performed by one or more of the persons, the method comprising providing a personnel database (30) comprising a multitude of entries for a multitude of persons, each entry comprising initial professional data of the respective person, wherein the initial professional data at least comprises information about profession, licenses and skills of the person related to at least one of the tasks, and assigning at least a subset of the multitude of persons to one or more of the plurality of projects based on the initial professional data, the method further comprises using a machine-learning algorithm for reiteratively and continuously performing a database updating procedure, and using an optimization algorithm for performing an allocation optimization procedure, wherein the database updating procedure comprises collecting feedback (50) on a performance of the assigned persons, and updating the database entries of the assigned persons based on the feedback to create learned data for the assigned persons, the learned data comprising one or more performance ratings, wherein the allocation optimization procedure comprises assigning at least a subset of the multitude of persons to one or more of the plurality of projects based on the initial professional data and on the learned data.

## Description

The present invention pertains to a computer-implemented method and system for allocating human resources, i.e. personnel, to a multitude of concurrently running projects, e.g. to allocating construction staff to construction projects.

In the art of general construction work such as building construction and civil engineering, planning, progress observation, documentation, appropriate accounting are important key factors. In many instances, those aspects are getting more and more complex and dynamic, in particular due to the many parties involved, fluctuating human and/or objective resources, increased complexity of the end results, tighter schedules, increased costs of human resources, etc. Work that was formerly planed and overseen by a single manager is nowadays too complex for a single person and a splitting between multiple people often miscarries at the thereby uprising interfaces.

Therefore, it has been tried to expand automation and computerization in this technical field. For example, in the art of building construction EP 2 629 210, JP 5489310, CN 103886139, US 2014/268064 or US 2014/192159 are giving examples of so called BIM-System approaches.

When planning execution of a project, a time-consuming step is the estimation of different skills and the temporal and local availability of the employees or sub-contractors for the project. Assuming that there is more than one project at the same time and that there are more than one person with the same skills, then the question comes up how to select the people for the different tasks in the combined project portfolio. This is an optimization problem that is known per se as the Personnel Assignment Problem. For instance, US 2019/0057327 A1 describes some solutions using algorithms for the facilitation of resource allocation comprising personell scheduling in the field of airline operations.

It is therefore an object of the present invention to provide an improved method and system for allocating human resources, i.e. persons, to concurrently running projects.

It is another object to provide such a method and system that allow performing the allocation in a fully automated manner.

It is a particular object to provide such a system and method that allow continuously improving the allocation over time.

At least one of these objects is achieved by the claimed method and the claimed system of the present invention.

A first aspect of the present invention relates to a computer-implemented method for automated and optimized allocation of persons to a plurality of projects, each project comprising one or more tasks to be performed by one or more of the persons. The method comprises
- providing a personnel database comprising a multitude of entries for a multitude of persons, each entry comprising initial professional data of the respective person, wherein the initial professional data at least comprises information about profession, licenses and skills of the person related to at least one of the tasks, and
- assigning at least a subset of the multitude of persons to one or more of the plurality of projects based on the initial professional data.

According to this aspect of the invention, the method further comprises using a machine-learning algorithm for reiteratively and continuously performing a database updating procedure, and using an optimization algorithm for performing an allocation optimization procedure. The database updating procedure comprises collecting feedback on a performance of the assigned persons, and updating the database entries of the assigned persons based on the feedback to create learned data for the assigned persons, the learned data comprising one or more performance ratings. The allocation optimization procedure comprises assigning at least a subset of the multitude of persons to one or more of the plurality of projects based on the initial professional data and on the learned data.

According to one embodiment of the method, each database entry comprises availability data comprising information about a temporal and/or local availability of the person, wherein assigning persons to projects is also based on the availability data, particularly wherein the database entry is editable by the person with respect to the availability data.

According to another embodiment of the method, each database entry comprises personal data comprising personal information about the person, particularly wherein the database entry is editable by the person with respect to the personal data.

According to another embodiment of the method, the initial professional data comprises one or more initial performance ratings, and creating the learned data comprises updating the initial performance ratings so that the learned data comprises updated performance ratings, particularly wherein the database entry is editable by the person with respect to the initial professional data.

According to another embodiment, the method comprises using a graph database for performing the allocation optimization procedure.

According to another embodiment of the method, the allocation optimization procedure comprises assigning persons to projects optimized with respect to at least one of:
- cost,
- quality,
- time,
- sustainability, and
- climate footprint.

According to another embodiment of the method, the feedback comprises at least information about an individual performance of at least one assigned person, in particular of each of the assigned persons, for at least one task performed by the at least one person, in particular for each task performed by the at least one person.

According to another embodiment of the method, the feedback for each assigned person comprises one or more soft-skill ratings of the person, and the learned data comprises one or more soft-skill ratings. The soft-skill ratings may comprise at least one of:
- stress resistance,
- good-naturedness,
- compatibility with other persons in general,
- compatibility with specific other persons,
- willingness to work overtime,
- leadership or managerial skills.

According to another embodiment of the method, the feedback comprises an overall performance feedback related to the performance of the assigned persons at the projects, wherein the overall performance feedback is used in the allocation optimization procedure.

In one embodiment, the allocation optimization procedure comprises providing the overall performance feedback to a learning intelligent agent (IA). The learning IA may comprise a learning element, a performance element and a problem generator element. The overall performance feedback may be compared with a performance standard related to an expected performance of the projects. The learning IA may be used for assigning at least the subset of the multitude of persons to the one or more of the plurality of projects based on the initial professional data, on the learned data and on the overall performance feedback.

According to another embodiment of the method, the persons are employed by a plurality of different employers and/or are self-employed, wherein the initial professional data at least comprises information about costs incurring when a person is assigned to a task, in particular comprising at least a wage rate of the person. The allocation optimization procedure may comprise assigning persons to projects optimized with respect to cost.

According to another embodiment of the method, at least a subset of the persons is employed by at least one sub-contractor, wherein
- the personnel database comprises an entry for the at least one sub-contractor, each entry comprising collective initial professional data of the persons of the sub-contractor,
- the at least one sub-contractor is assigned to one or more of the plurality of projects based on the collective initial professional data,
- the database entry of the assigned sub-contractor is updated based on the feedback to create collective learned data for the assigned sub-contractor, the collective learned data comprising a plurality of performance ratings, and
- the allocation optimization procedure comprises assigning the at least one sub-contractor to one or more of the plurality of projects based on the collective initial professional data and on the collective learned data.

According to another embodiment of the method, the initial professional data comprises operator information about licenses and skills of a person related to the use of certain tools or machinery, wherein the allocation optimization procedure further comprises assigning persons to projects also based on the operator information, and/or assigning tools or machinery to persons assigned to projects based on the operator information. In particular, the feedback comprises information on a performance of the assigned persons with the assigned tools.

According to another embodiment of the method, the feedback is at least partially generated automatically by considering objective data related to the respective person's performance at an assigned project. The objective data comprises at least one of
- a time needed for performing one or more assigned tasks,
- a relative or absolute number of assigned tasks performed,
- a final acceptance or rejection of the work effected by the person, and
- a number and severity of incidents, particularly accidents, involving the person.

A second aspect of the invention pertains to a computer system for automated and optimized allocation of persons to a plurality of projects, particularly according to the method of any one of the first aspect, each project comprising one or more tasks to be performed by one or more of the persons. The system comprises a personnel database, and a computing unit comprising at least a machine-learning algorithm and an optimization algorithm. The personnel database is configured to store a multitude of entries for a multitude of persons, each entry comprising initial professional data of the respective person, wherein the initial professional data at least comprises information about profession, licenses and skills of the person related to at least one of the tasks. The system is configured to assign at least a subset of the multitude of persons to one or more of the plurality of projects based on the initial professional data. The machine-learning algorithm is configured for reiteratively and continuously performing a database updating procedure, and the optimization algorithm is configured for performing an allocation optimization procedure. In the course of the database updating procedure, the system is configured to collect feedback on a performance of the assigned persons, and to update the database entries of the assigned persons based on the feedback to create learned data for the assigned persons, the learned data comprising one or more performance ratings. In the course of the allocation optimization procedure, the system is configured to assign at least a subset of the multitude of persons to one or more of the plurality of projects based on the initial professional data and on the learned data.

A third aspect of the invention pertains to a computer programme product comprising programme code which is stored on a machine-readable medium, or being embodied by an electromagnetic wave comprising a programme code segment, and having computer-executable instructions for performing, in particular when run on the computing unit of a system according to the second aspect, the method according to the first aspect.

The invention in the following will be described in detail by referring to exemplary embodiments that are accompanied by figures, in which:
- Fig. 1: illustrates the working principle and object of the present invention;
- Fig. 2: illustrates an exemplary embodiment of a method according to the invention;
- Fig. 3: illustrates a first exemplary embodiment of a system according to the invention;
- Fig. 4: illustrates a second exemplary embodiment of a system according to the invention; and
- Fig. 5: illustrates an exemplary embodiment of an intelligent agent to be used with the system of Fig. 4.

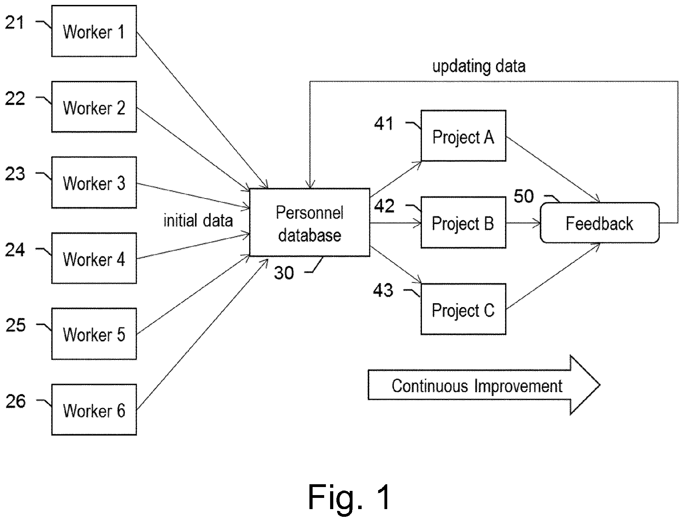

Figure 1 illustrates the working principle and the object of the present invention. A multitude of workers 21-26 are to be allocated to a plurality of projects 41, 42, 43. The allocation is performed automatically by a system 1 comprising (or having access to) a central personnel database 30 having stored information about each of the workers 21-26. At first, each worker provides initial data comprising basic details such as information about their profession, their licenses and skills that might be of relevance for performing tasks at one or more of the projects 41-43. Based on the initial data stored in the database 30, some or all of the workers are assigned to the projects.

Feedback 50 is generated, particularly after one of the projects is completed. The feedback 50 at least comprises information about the workers' individual performance at their assigned tasks at the project and is provided to the database 30 to update the workers' entries. The feedback can be that of a human, e.g. a foreman or a project director or the workers themselves, and thus comprise subjective assessment of the performance.

The feedback can also partially comprise objective assessment of the overall performance, e.g. a needed time for performing a task, whether all tasks were performed according to specifications or whether accidents or other unwanted incidents did occur during the project. In this case, the feedback may be generated at least partially automatically by considering objective data related to the respective person's performance at an assigned project. Said objective data may comprise at least one of
- a time needed for performing one or more tasks that were assigned to the person,
- a relative or absolute number of assigned tasks performed,
- a final acceptance or rejection of the work effected by the person, e.g. an acceptance or rejection by a supervisor of the worker or by a consigner of the project, or
- a number, kind and severity of incidents (such as accidents) that occurred during the project and involved the person.

The feedback 50 may also be related to a quality and efficiency of the performance, for instance comprising at least three levels regarding a performance, such as in the form of "poor", "good" and "overdone".

When looking at the quality and efficiency of a performance, this may not only include the personal values but also those of the complete project or sub-project to which the performed tasks are assigned to. For example, when setting up a wall, it is important that the feedback 50 also considers an overall performance related to that wall and not just some individual tasks performed at the wall. If, in this example, one carpenter sets up a wall in such a way that a painter subsequently needs to plaster the whole wall, whereas a second carpenter sets up the wall so that the same painter just needs to do some minor details, the feedback 50 should consider also the total time and cost for finishing the wall, rather than only the individual performances of the two carpenters and the painter.

The feedback 50 is used to update, i.e. to complement and/or revise, the existing (e.g. initial) information in the personnel database. This "learned" data is then used for assigning the workers for new projects. This is a re-iterative process that allows for an automated continuous improvement of the resource allocation. The initial professional data may comprise one or more initial performance ratings, and creating the learned data may comprise updating the initial performance ratings so that the learned data comprises reiteratively a continuously updated performance ratings.

The feedback 50 for each assigned worker 21-26 may comprise one or more soft-skill ratings of the person, so that the learned data comprises one or more soft-skill ratings. For instance, these may comprise information about a worker's stress resistance, good-naturedness, a compatibility with other persons in general or with specific other persons, a willingness to work overtime or leadership and managerial skills. The learned soft-skill ratings may then be used to improve the assigning of the workers, e.g. by avoiding to assign two incompatible workers to the same project.

The workers 21-26 may add further information or update the existing information if necessary. Also, the feedback 50 may comprise adding additional or changing existing information.

The database entries preferably comprise personal data, i.e. personal information about the respective worker 21-26, such as name, age and address. The database entry may be editable by the worker with respect to the personal data, for instance to edit contact details if necessary.

For instance, each database entry may comprise availability data comprising information about a temporal and/or local availability of the respective worker. The database entry then may be editable by the worker with respect to the availability data. The process of assigning workers to projects then would be based also on the availability data, i.e. not assigning workers to projects if this would include times or places at which the workers are not available.

All workers 21-26 included in the database 30 may be employees of the same company, e.g. the company running the system 1. Alternatively, the workers can be employed by a plurality of different employers, e.g. comprising sub-contractors, which provide the initial data. Also, some or all of the workers 21-26 may be self-employed. The initial professional data may comprise information about costs incurring when a person is assigned to a task, e.g. a wage rate of the person. In this case, the process of assigning persons to projects may be optimized with respect to cost.

Optionally, tools or machinery may be allocated together with the workers. Particularly, workers can be assigned to work with certain tools or machinery allocated to the same project. Then, the initial professional data preferably additionally comprises information about licenses and skills of a person related to the use of such tools or machinery (operator information), and the allocation may further comprise assigning the workers 21-26 to the projects 41-43 also based on this operator information. Also the tools or machinery can be assigned to projects 41-43 based on the operator information of workers 21-26 assigned to those projects. Alternatively or additionally, the tools or machinery may be assigned to specific workers based on the operator information. Preferably, the feedback 50 may comprise information on a performance of the assigned persons 21-26 with the assigned tools or machinery so that also the operator information can be updated based on the feedback to improve the allocation in the future.

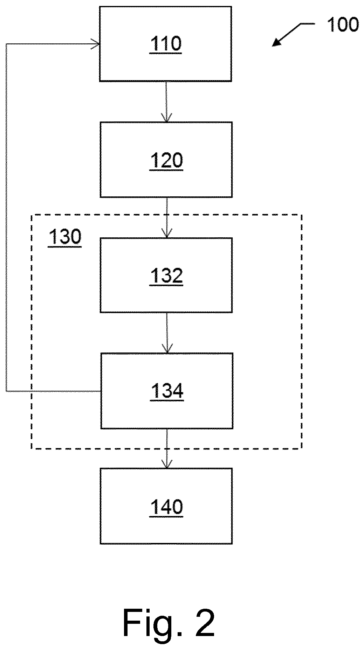

Figure 2 is a flow-chart illustrating an exemplary embodiment of a method 100 according to the invention. The method that typically is computer-implemented comprises the step 110 of providing a personnel database with a multitude of entries for a multitude of persons, wherein each entry comprises initial professional data of the respective person, such as information about profession, licenses and skills, and the step 120 of assigning all or some of the persons to the projects based on the initial professional data stored in the database.

The method further comprises a database updating procedure 130 with a first step 132 of collecting feedback on a performance of the assigned persons, and a second step 134 of updating the database entries of the assigned persons based on the feedback to create the learned data for the assigned persons, e.g. comprising one or more performance ratings. Using a machine-learning algorithm, the database updating procedure 130 can be performed reiteratively and continuously in a semi- or fully automated manner.

The method finally comprises an allocation optimization procedure 140, wherein the persons are allocated to the projects based not only on their initial professional data but also on the learned data generated during one or more cycles of the database updating procedure 130. The allocation optimization procedure 140 can be performed fully automatically using an optimization algorithm.

For instance, a graph database (GDB) could be used for performing the allocation optimization procedure 140. A GDB is a database that uses graph structures for semantic queries with nodes, edges, and properties to represent and store data. A key concept of the system is the "graph" which relates the data items in the store to a collection of nodes and edges, the edges representing the relationships between the nodes. The relationships allow data in the store to be linked together directly and, in many cases, retrieved with one operation. GDB hold the relationships between data as a priority. Querying relationships within a graph database is fast because they are perpetually stored within the database itself. Relationships can be intuitively visualized using graph databases, making them useful for heavily interconnected data.

With sufficient information provided by the database, optimizing the assigning of persons to projects can be done for instance with respect to cost, quality and time, or even with respect to sustainability and climate footprint.

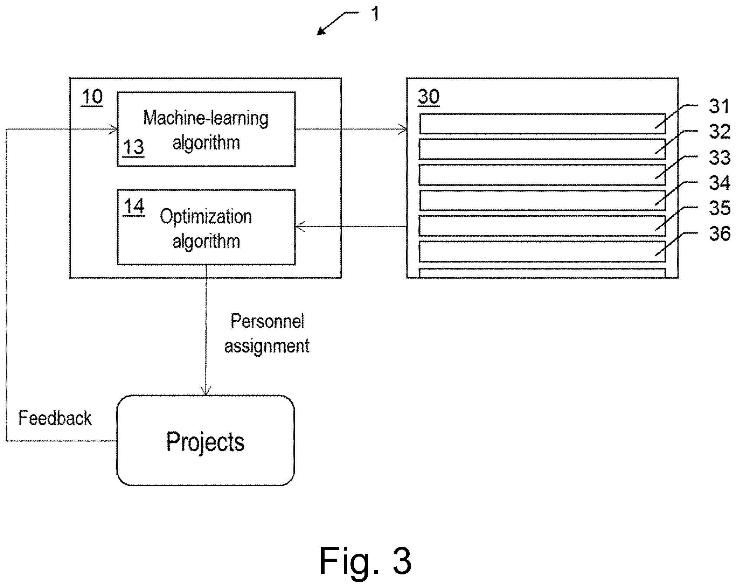

Figure 3 shows a first exemplary embodiment of a system 1 according to the invention. It is configured for automated and optimized allocation of persons to a plurality of projects, each project comprising one or more tasks to be performed by one or more of the persons. The shown system 1 comprises at least one computing unit 10 that is configured to run a machine-learning algorithm 13 and an optimization algorithm 14. These are configured to interact with a personnel database 30 of the system 1. The database 30 is configured to store a multitude of entries 31-36, each entry comprising at least initial professional data of one of a multitude of persons to be allocated. The initial professional data comprises information about profession, licenses and skills of a person.

The system 1 is configured to assign at least a subset of the multitude of persons to one or more of a plurality of projects based on the initial professional data stored in the database 30.

The machine-learning algorithm 13 of the computing unit 10 is configured to reiteratively and continuously perform a database updating procedure which comprises collecting feedback on a performance of the assigned persons, and updating the database entries 31-36 of the assigned persons based on the feedback to create learned data for the assigned persons, the learned data comprising one or more performance ratings.

The optimization algorithm 14 of the computing unit 10 is configured to perform an allocation optimization procedure, comprising assigning at least a subset of the multitude of persons to the projects based on the initial professional data and on the learned data stored in the entries 31-36 of the database 30.

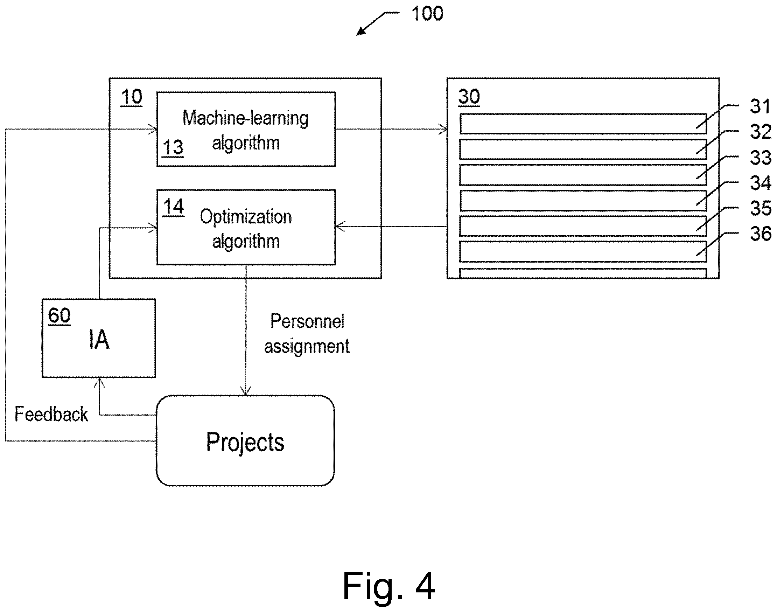

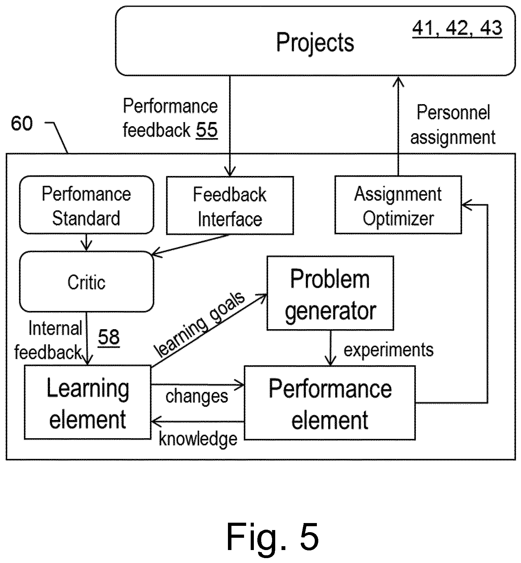

Figure 4 shows a second embodiment of a system 1 according to the invention. Together with Figure 5, it illustrates the use of an intelligent agent (IA) 60 for optimizing the assignment of persons to projects 41-43 based on feedback 50 related to the persons' performance at previously assigned projects. In artificial intelligence (AI), an IA generally refers to an autonomous entity which acts, directing its activity towards achieving goals, upon an environment using observation through sensors and consequent actuators. IA may also learn or use knowledge to achieve their goals. They may be very simple or very complex. In contrast to the embodiment of Figure 3, at least some of the feedback is provided as input to the IA 60 and processed there. Based thereon, IA output is provided from the IA 60 to the optimization algorithm 14 which uses this output for its personnel assignment to the projects. This may comprise further optimizing the selection of suited persons for the tasks, or targeted experimenting with the assignments to increase the learning efficiency of the system.

Figure 5 shows an exemplary embodiment of an IA 60 to be used in the system of Figure 4. The IA 60 of Figure 5 is a so-called learning agent. Learning has the advantage that it allows the agents to initially operate in unknown environments and to become more competent than its initial knowledge alone might allow. The IA 60 comprises a learning element and a performance element. The learning element is responsible for making improvements, and the performance element is responsible for selecting external actions, i.e. assigning certain persons to certain projects. It can be perceived as an agent in itself, since it decides on actions based on perceptions.

A critic unit of the IA 60 receives feedback related to a performance of the workforce as a whole at the projects (performance feedback 55) via a feedback interface (that serves as a sensor of the IA 60) and, comparing the provided feedback and a performance standard, generates internal feedback 58 on how the agent is doing, e.g. how the actual performance of the assigned personnel is compared to what could have been expected.

The learning element uses the internal feedback 58 from the critic on how the agent is doing and determines how the performance element should be modified to improve the assignment in the future.

A further component of the depicted learning agent 60 is a problem generator that, based on learning goals provided by the learning element, suggests actions to the performance element that will lead to new and informative experiences.

Although the invention is illustrated above, partly with reference to some preferred embodiments, it must be understood that numerous modifications and combinations of different features of the embodiments can be made. All of these modifications lie within the scope of the appended claims.

## Claims

1. Computer-implemented method (100) for automated and optimized allocation of persons (21-26) to a plurality of projects (41-43), each project comprising one or more tasks to be performed by one or more of the persons (21-26), the method comprising
- providing (110) a personnel database (30) comprising a multitude of entries (31-36) for a multitude of persons (21-26), each entry comprising initial professional data of the respective person (21-26), wherein the initial professional data at least comprises information about profession, licenses and skills of the person (21-26) related to at least one of the tasks, and
- assigning (120) at least a subset of the multitude of persons (21-26) to one or more of the plurality of projects (41-43) based on the initial professional data,
**characterized in that**
the method further comprises using a machine-learning algorithm (13) for reiteratively and continuously performing a database updating procedure (130), and using an optimization algorithm (14) for performing an allocation optimization procedure (140),
wherein the database updating procedure (130) comprises
- collecting (132) feedback (50) on a performance of the assigned persons (21-26), and
- updating (134) the database entries (31-36) of the assigned persons based on the feedback to create learned data for the assigned persons, the learned data comprising one or more performance ratings, wherein the allocation optimization procedure (140) comprises assigning at least a subset of the multitude of persons (21-26) to one or more of the plurality of projects (41-43) based on the initial professional data and on the learned data.

2. Method (100) according to claim 1,
**characterized in that**
each database entry (31-36) comprises availability data comprising information about a temporal and/or local availability of the person (21-26), wherein assigning persons to projects (41-43) is also based on the availability data, particularly wherein the database entry is editable by the person with respect to the availability data.

3. Method (100) according to claim 1 or claim 2,
**characterized in that**
each database entry (31-36) comprises personal data comprising personal information about the person (21-26), particularly wherein the database entry is editable by the person with respect to the personal data.

4. Method (100) according to any one of the preceding claims,
**characterized in that**
the initial professional data comprises one or more initial performance ratings, and creating the learned data comprises updating the initial performance ratings so that the learned data comprises updated performance ratings, particularly wherein the database entry is editable by the person with respect to the initial professional data.

5. Method (100) according to any one of the preceding claims,
**characterized by**
using a graph database for performing the allocation optimization procedure (140).

6. Method (100) according to any one of the preceding claims,
**characterized in that**
the allocation optimization procedure (140) comprises assigning persons (21-26) to projects (41-43) optimized with respect to at least one of:
- cost,
- quality,
- time,
- sustainability, and
- climate footprint.

7. Method (100) according to any one of the preceding claims,
**characterized in that**
the feedback (50) comprises at least information about an individual performance of at least one assigned person (21-26), in particular of each of the assigned persons, for at least one task performed by the at least one person, in particular for each task performed by the at least one person.

8. Method (100) according to claim 7,
**characterized in that**
- the feedback (50) for each assigned person (21-26) comprises one or more soft-skill ratings of the person, and
- the learned data comprises one or more soft-skill ratings,
wherein the soft-skill ratings comprise at least one of:
- stress resistance,
- good-naturedness,
- compatibility with other persons in general,
- compatibility with specific other persons,
- willingness to work overtime,
- leadership or managerial skills.

9. Method (100) according to any one of the preceding claims,
**characterized in that**
the feedback (50) comprises an overall performance feedback (55) related to the performance of the assigned persons at the projects (41-43), wherein the overall performance feedback (55) is used in the allocation optimization procedure (140), and wherein the allocation optimization procedure (140) comprises providing the overall performance feedback (55) to a learning intelligent agent (60), particularly wherein
- the learning intelligent agent (60) comprises a learning element, a performance element and a problem generator element,
- the overall performance feedback (55) is compared with a performance standard related to an expected performance of the projects (41-43), and/or
- the learning intelligent agent (60) is used for assigning at least the subset of the multitude of persons (21-26) to the one or more of the plurality of projects (41-43) based on the initial professional data, on the learned data and on the overall performance feedback (55).

10. Method (100) according to any one of the preceding claims,
**characterized in that**
the persons (21-26) are employed by a plurality of different employers and/or are self-employed, wherein the initial professional data at least comprises information about costs incurring when a person is assigned to a task, in particular comprising at least a wage rate of the person, particularly wherein the allocation optimization procedure (140) comprises assigning persons to projects optimized with respect to cost.

11. Method (100) according to any one of the preceding claims,
**characterized in that**
at least a subset of the persons (21-26) are employed by at least one sub-contractor, wherein
- the personnel database (30) comprises an entry for the at least one sub-contractor, comprising collective initial professional data of the persons of the sub-contractor,
- the at least one sub-contractor is assigned to one or more of the plurality of projects (41-43) based on the collective initial professional data,
- the database entry of the assigned sub-contractor is updated based on the feedback to create collective learned data for the assigned sub-contractor, the collective learned data comprising a plurality of performance ratings, and
- the allocation optimization procedure (140) comprises assigning the at least one sub-contractor to one or more of the plurality of projects (41-43) based on the collective initial professional data and on the collective learned data.

12. Method (100) according to any one of the preceding claims,
**characterized in that**
the initial professional data comprises operator information about licenses and skills of a person (21-26) related to the use of certain tools or machinery, wherein the allocation optimization procedure (140) further comprises
- assigning persons (21-26) to projects (41-43) also based on the operator information, and/or
- assigning tools or machinery to persons (21-26) assigned to projects (41-43) based on the operator information,
particularly wherein the feedback (50) comprises information on a performance of the assigned persons (21-26) with the assigned tools.

13. Method (100) according to any one of the preceding claims,
**characterized in that**
the feedback (50) is at least partially generated automatically by considering objective data related to the respective person's performance at an assigned project (41-43), wherein the objective data comprises at least one of
- a time needed for performing one or more assigned tasks,
- a relative or absolute number of assigned tasks performed,
- a final acceptance or rejection of the work effected by the person,
- number and severity of incidents, particularly accidents, involving the person.

14. System (1) for automated and optimized allocation of persons (21-26) to a plurality of projects (41-43), particularly according to the method (100) of any one of the preceding claims, each project comprising one or more tasks to be performed by one or more of the persons (21-26), the system comprising
- a personnel database (30), and
- a computing unit (10) comprising at least a machine-learning algorithm (13) and an optimization algorithm (14),
wherein
- the personnel database (30) is configured to store a multitude of entries (31-36) for a multitude of persons (21-26), each entry (31-36) comprising initial professional data of the respective person (21-26), wherein the initial professional data at least comprises information about profession, licenses and skills of the person (21-26) related to at least one of the tasks,
- the system is configured to assign (120) at least a subset of the multitude of persons (21-26) to one or more of the plurality of projects (41-43) based on the initial professional data,
- the machine-learning algorithm (13) is configured for reiteratively and continuously performing a database updating procedure (130), and
- the optimization algorithm (14) is configured for performing an allocation optimization procedure (140),
wherein, in the course of the database updating procedure (130), the system (1) is configured to
- collect (132) feedback (50) on a performance of the assigned persons (21-26), and
- update (134) the database entries of the assigned persons based on the feedback to create learned data for the assigned persons, the learned data comprising one or more performance ratings,
wherein, in the course of the allocation optimization procedure (140), the system is configured to assign at least a subset of the multitude of persons (21-26) to one or more of the plurality of projects (41-43) based on the initial professional data and on the learned data.

15. Computer programme product comprising programme code which is stored on a machine-readable medium, or being embodied by an electromagnetic wave comprising a programme code segment, and having computer-executable instructions for performing, in particular when run on the computing unit (10) of a system (1) according to claim 14, the method (100) according to one of the claims 1 to 13.
